# EUROPEAN PATENT APPLICATION

(11) **EP 4 195 368 A1**
(43) Date of publication of application: **14.06.2023**
(21) Application number: 21290072.4
(22) Date of filing: 09.12.2021
(51) Int. Cl.: H01M 10/6563, H01M 10/625, H01M 10/613, H01M 10/6566, H01M 50/204

(54) **AIR DELIVERY MODULE AND BATTERY CASING FOR A BATTERY PACK**

(71) Applicant: MANN+HUMMEL GmbH, 71636 Ludwigsburg (DE)
(72) Inventor: Zenner, Julien, 53940 Ahuille (FR); Migaud, Jerome, 35500 Vitré (FR); Georgelin, Nathan, 53000 Laval (FR); Philippe, Remi, 06460 Saint-Vallier-de-Thiey (FR); Launay, Tristan, 72000 Le Mans (FR)
(74) Representative: Mann + Hummel Intellectual Property

(57) **Abstract**

The invention relates to an air delivery module (100) for a battery pack (10) of an electric driven or hybrid vehicle (200) comprising a battery casing (14) with at least an air intake manifold (22), at least one fan (16) and at least an exhaust air manifold (26), wherein the air intake manifold (22) is configured to be at least in fluid connection with an outside (80) and/or with an interior (202) of the vehicle (200) and/or with an air conditioning system (52) supplying air from the outside (80) to the vehicle (200), wherein the exhaust air manifold (26) is configured to be at least in fluid connection with the outside (80) and/or with the interior (202) of the vehicle (202), wherein the at least one fan (16) is provided for blowing air from the air intake manifold (22) through the battery casing (14) to the exhaust air manifold (26) for cooling the battery pack (10).

The invention relates further to a battery casing (14) for an air delivery module (100).

## Description

### Technical Field

The invention relates to an air delivery module for a battery pack of an electric driven or hybrid vehicle as well as to a battery casing for an air delivery module for a battery pack of an electric driven or hybrid vehicle.

### Prior Art

CN 210443643 U discloses an air cooling structure of a lithium battery pack comprising a lithium battery pack cooling device in a box body. A cooling box is fixedly connected to the top of the box body. A first dust filter is embedded into the top of the cooling box. Three fans are fixedly mounted at the bottom of the first dust filter and an air inlet is formed in the top of the box body right below the fans. A first dustproof net and a second dustproof net are arranged to prevented dust from being mixed into the lithium battery pack in use. The air speed and air flow are increased by the fans, thus improving heat dissipation.

### Disclosure of the Invention

It is an object of the invention to provide a more efficient air cooling system for a battery pack of an electric driven or hybrid vehicle.

Another object of the invention is to provide a battery casing for such an efficient air cooling system.

The first object is achieved by an air delivery module for a battery pack of an electric driven or hybrid vehicle comprising a battery casing with at least an air intake manifold, at least one fan and at least an exhaust air manifold, wherein the air intake manifold is configured to be at least in fluid connection with an outside and/or with an interior of the vehicle and/or with an air conditioning system supplying air from the outside to the vehicle, wherein the exhaust air manifold is configured to be at least in fluid connection with the outside and/or with the interior of the vehicle, wherein the at least one fan is provided for blowing air from the air intake manifold through the battery casing to the exhaust air manifold for cooling the battery pack.

Another object is achieved by a battery casing for an air delivery module for a battery pack of an electric driven or hybrid vehicle, comprising at least an air intake manifold, at least one fan and at least an exhaust air manifold, wherein the air intake manifold is configured to be at least in fluid connection with an outside and/or with an interior of the vehicle and/or with an air conditioning system supplying air from the outside to the vehicle, wherein the exhaust air manifold is configured to be at least in fluid connection with the outside and/or with the interior of the vehicle, wherein the at least one fan is provided for blowing air from the air intake manifold through the battery casing to the exhaust air manifold for cooling the battery pack.

Favorable embodiments and advantages of the invention are apparent from the further claims, the description and the drawings.

In a first aspect of the invention an air delivery module for a battery pack of an electric driven or hybrid vehicle is proposed, comprising a battery casing with at least an air intake manifold, at least one fan and at least an exhaust air manifold, wherein the air intake manifold is configured to be at least in fluid connection with an outside and/or with an interior of the vehicle and/or with an air conditioning system supplying air from the outside to the vehicle, wherein the exhaust air manifold is configured to be at least in fluid connection with the outside and/or with the interior of the vehicle, wherein the at least one fan is provided for blowing air from the air intake manifold through the battery casing to the exhaust air manifold for cooling the battery pack.

Batteries of so-called mild hybrid vehicles need to be cooled to maintain performance of the vehicle and to preserve lifetime of the battery. Different technologies can be used to cool down the battery pack. Air cooling is one of these technologies. The proposed air delivery module comprises a battery casing with a fan, an intake manifold and an exhaust manifold. The air delivery module can be supplied with fresh air coming from the vehicle cabin or even outside. Due to a three-way valve, the air can come directly from an air conditioning system, which mostly may be a so-called heating, ventilation and air conditioning system (HVAC). The source of fresh air can be selected depending on operating parameters of the battery and/or the vehicle. Regarding the exhaust, the air can be pushed into the cabin or outside depending on actuation of a three-way valve for the exhaust. Favorably, it can be selected depending on operation parameters of the battery and/or the vehicle whether the air is exhausted into the cabin or the outside. The battery pack can be cooled down due to a fan, depending on allocated packaging and boundary conditions for architecture integration. Advantageously, two fans may be used for air blowing through the battery pack.

Regarding the packaging to optimize the air flow through the battery pack, according to state of the art, air is being blown directly to the battery pack. Due to the proposed air delivery module, the air will go through the battery pack, directly between the cells of the battery pack. Some one or more turbulence-generating elements, in particular plates may be integrated inside the battery pack to increase air turbulences between cells and improve thermal exchange between cells and air.

Due to the position of the battery pack, which is mostly under a front passenger seat, the acoustic behavior is playing a major role. According to the proposed air delivery module with encapsulation and acoustic material, noise emission in the vehicle can be preserved at low level to maintain the comfort of the passengers in the vehicle.

Management of the air may be advantageous due to the link with an air conditioning system of the vehicle. Depending on the temperature outside, inside the cabin or even a request from the battery, the air supplied to the battery pack could be air coming from outside the vehicle or inside. The fan speed may also advantageously depend on system heat generation and/or the temperature of the air supplied to the battery pack. Favorably, a coupling between all of these operating parameters may be established for selecting the most appropriate source of air supply.

Compared to existing technologies like liquid cooling, for instance, integration of the proposed air delivery module for cooling a battery pack is facilitated. The proposed air delivery module may advantageously use the air conditioning system of the vehicle to decrease temperature of air inlet in order to increase performances of cooling. Thus placing of the battery pack under one of the front seats may be favorable for profiting from the proximity to the air conditioning system.

Advantageously batteries with greater battery capacities in the range of 1 kWh may be cooled with the proposed air delivery module.

According to a favorable embodiment of the air delivery module, a three-way valve may be arranged at an inlet port of the air intake manifold to selectively switch between an air inlet from the outside and an inlet duct from the air conditioning system of the vehicle for supplying air to the battery casing. Additionally or alternatively a three-way valve may be arranged at an outlet port of the exhaust air manifold to selectively switch between an air outlet to the outside and an interior outlet to the interior of the vehicle for purging air from the battery casing. Thus the air blown into the battery pack may be selected according to the temperature of the battery pack and/or of the interior of the vehicle and/or outside temperature to choose most efficient operating conditions for cooling the battery pack

According to a favorable embodiment of the air delivery module, at least one filter element for filtering the air may be arranged upstream and/or downstream of the fan. By this way it may be ensured that the air blown into the battery pack is really clean air. Thus low pressure loss of the air flow may be achieved. The filter element may advantageously be suitable for lifetime use.

According to a favorable embodiment of the air delivery module, a fluid path of the cooling air inside of the battery casing may be provided between cells, in particular between longitudinal sides of the cells of the battery pack arranged in the battery casing. Thus most effective cooling of the battery cells may be achieved in order to guarantee efficient operation of the battery pack and maintaining a favorable lifetime of the battery. Air blown between the battery cells may be in temperature ranges of, e.g., 15°C for inflowing air, and not more than 40°C for exhausting air.

Advantageously at least two fans may be arranged at the battery casing for supplying air to the battery casing. Thus a greater volume of air may be supplied to the battery pack and the air may be distributed even in larger battery casings.

According to a favorable embodiment of the air delivery module, acoustic material, in particular noise absorbent material may be arranged inside or outside of the battery casing, in particular around the at least one fan in order to decrease noise emissions from blowing air. Thus acoustic conditions of the air blown through the battery pack may significantly be improved. Noise emission of the air blown may be decreased by encapsulation of the air delivery module, as well as placing the fan in the volume of the air delivery module and favorably placing of the inlet and the outlet for the air.

According to a favorable embodiment of the air delivery module, one or more porous patches for reducing noise emissions may be arranged at least in an inlet duct connected to the air intake manifold and/or an outlet duct connected to the exhaust air manifold. Thus acoustic conditions of the air flow in the inlet duct and/or the outlet duct may significantly be improved. Thus noise emissions may favorably be absorbed.

According to a favorable embodiment of the air delivery module, one or more turbulence-generating elements, such as plates, may be arranged in the fluid path of the battery casing for increasing air turbulences. Cooling behavior of the air blown through the battery casing and between the cells may be enhanced compared to less turbulent flow of the air.

According to a favorable embodiment of the air delivery module, the at least one fan may be arranged on a side wall of the battery casing. This positioning of the fan on a side wall of the battery casing ensures a favorable compact design of the battery pack and at the same time an effective cooling of the battery cells.

According to a favorable embodiment of the air delivery module, an electronic compartment for accommodating electronic components may be arranged at the battery casing, in particular on a top side of the battery casing. The electronic compartment may favorably be used for accommodating, e.g., a battery management system or other electronic modules. The electronic modules may also be cooled by the air supplied by the air delivery module.

According to a favorable embodiment of the air delivery module, the air intake manifold and the exhaust air manifold may be arranged on opposite sides of the battery casing. By this way a most effective flow of the air blown through the battery casing, thus resulting in a most effective cooling behavior for the battery pack.

According to a favorable embodiment of the air delivery module, a control unit may be provided for controlling the speed of the at least one fan depending at least on heat generation of the battery pack. Thus the speed of the fan may be adapted to the cooling requirements of the battery cells, resulting in a most efficient cooling and improving the acoustic behavior due to slowing down the flow of the air whenever possible.

According to another aspect of the invention a battery casing for an air delivery module for a battery pack of an electric driven or hybrid vehicle is proposed, comprising at least an air intake manifold, at least one fan and at least an exhaust air manifold, wherein the air intake manifold is configured to be at least in fluid connection with an outside and/or with an interior of the vehicle and/or with an air conditioning system supplying air from the outside to the vehicle, wherein the exhaust air manifold is configured to be at least in fluid connection with the outside and/or with the interior of the vehicle, wherein the at least one fan is provided for blowing air from the air intake manifold through the battery casing to the exhaust air manifold for cooling the battery pack.

The battery casing proposed may favorably be configured for accommodating an air delivery module for a battery pack of an electric driven or hybrid vehicle. The air delivery module can be supplied with fresh air coming from the vehicle cabin or even outside. Due to a three-way valve, the air can come directly from an air conditioning system, which mostly may be a so-called heating, ventilation and air conditioning system (HVAC). Regarding the exhaust, the air can be pushed into the cabin or outside depending on actuation of a three-way valve for the exhaust. The battery pack can be cooled down due to a fan, depending on allocated packaging and boundary conditions for architecture integration. Advantageously, two fans may be used for air blowing through the battery casing.

Due to the air delivery module, the air will go through the battery casing, directly between the cells of the battery pack. Some one or more turbulence-generating elements, in particular plates may be integrated inside the battery casing to increase air turbulences between cells and improve thermal exchange between cells and air.

According to a favorable embodiment, the battery casing may comprise segments for accommodating the at least one air intake manifold, the at least one fan and the at least an exhaust air manifold. The segments serve as interfaces for connecting the at least one air intake manifold, the at least one fan and the at least an exhaust air manifold to the battery casing, thus ensuring a tight connection to the battery casing and obstacle-free flow of the air through the air delivery module.

According to a favorable embodiment of the battery casing, an electronic compartment for accommodating electronic components may be arranged on a top side of the battery casing, in particular between the at least one air intake manifold and the at least one exhaust air manifold. The electronic compartment may favorably be used for accommodating e.g. a battery management system or other electronic modules. The electronic modules may also be cooled by the air supplied by the air delivery module.

According to a favorable embodiment of the battery casing, the at least one fan may be arranged on a side wall of the battery casing. This positioning of the fan on a side wall of the battery casing ensures a most compact design of the battery pack and at the same time a most effective cooling of the battery cells.

### Brief Description of the Drawings

The present invention together with the above-mentioned and other objects and advantages may best be understood from the following detailed description of the embodiments, but not restricted to the embodiments, wherein is shown in:
- Fig. 1: a schematic view of an air delivery module for a battery pack of an electric driven or hybrid vehicle according to an embodiment of the invention;
- Fig. 2: a schematic view of the system architecture and positioning of the air delivery module according to an embodiment of the invention in a vehicle;
- Fig. 3: a schematic top view of a battery pack composition with the air delivery module according to an embodiment of the invention;
- Fig. 4: an exploded view of the air delivery module according to an embodiment of the invention from a top side;
- Fig. 5: an exploded view of the air delivery module according Figure 4 from a bottom side;
- Fig. 6: a view of the mounted air delivery module according Figure 4 from a top side;
- Fig. 7: an isometric view of the mounted air delivery module according Figure 4; and
- Fig. 8: a view of the mounted air delivery module according Figure 4 from a bottom side.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

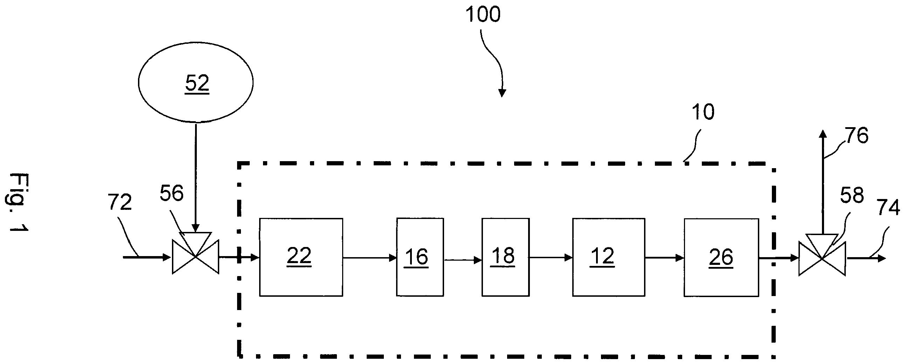

Figure 1 depicts a schematic view of an air delivery module 100 for a battery pack 10 of an electric driven or hybrid vehicle 200 according to an embodiment of the invention.

The proposed air delivery module 100 comprises at least an air intake manifold 22, at least one fan 16 and at least an exhaust air manifold 26.

The air intake manifold 22 is at least in fluid connection with an outside 80 or with an interior 202 of the vehicle 200 or with an air conditioning system 52 supplying air from the outside 80 to the vehicle 200.

The exhaust air manifold 26 is at least in fluid connection with the outside 80 or with the interior 202 of the vehicle 202.

The at least one fan 16 is provided for blowing air from the air intake manifold 22 through the battery casing 14 to the exhaust air manifold 26 for cooling the battery pack 10.

A three-way valve 56 is arranged at an inlet port 23 of the air intake manifold 22 to selectively switch an air inlet 72 from the outside 80 or an inlet duct 54 from the air conditioning system 52 of the vehicle 200 for supplying air to the battery casing 14. A three-way valve 58 is arranged at an outlet port 27 of the exhaust air manifold 26 to selectively switch an air outlet 74 to the outside 80 or an interior outlet 76 to the interior 202 of the vehicle 200 for purging air from the battery casing 14.

At least one filter element 18 for filtering the air is arranged upstream and/or downstream of the fan 16.

In Figure 1 the three-way valve 56 is connected to the air conditioning system 52 and to the air inlet 72, supplying air to the air intake manifold 22 of the battery pack 10. In the embodiment shown, the air is blown by the fan 16, followed by a filter element 18, cooling the cells 12 and exits the battery pack 10 after the exhaust air manifold 26 via the three-way valve 58. The three-way valve 58 is connected to the air outlet 74 and the interior outlet 76 into the vehicle 200.

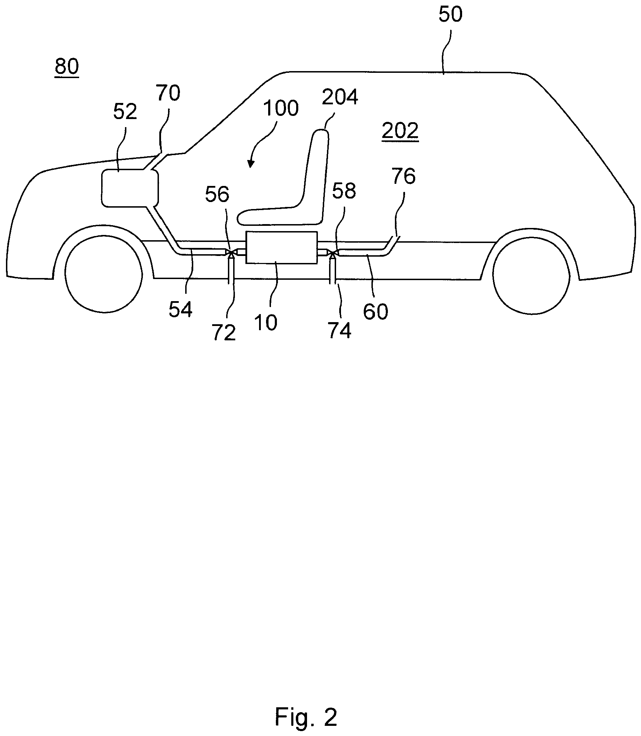

In Figure 2 a schematic view of the system architecture and positioning of the air delivery module 100 in the vehicle 200 is illustrated.

The battery pack 10 is placed under the front seat 204 of the vehicle 200. Air may enter the battery pack 10 via the three-way valve 56, which is connected to the air conditioning system 52 via the inlet duct 54 and to the air inlet 72 supplying air from the outside 80. The air conditioning system 52 gets fresh air via the fresh air inlet 70.

Air may exit the battery pack 10 via the three-way valve 58 which is connected to the air outlet 74 purging air to the outside 80 and the interior outlet 76 via the outlet duct 60 purging air to the interior 202 of the vehicle 200.

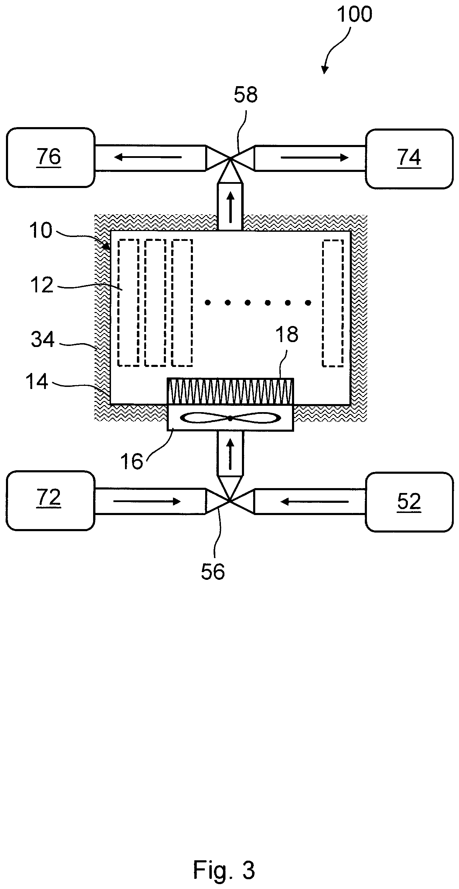

In Figure 3 a schematic top view of a battery pack composition with the air delivery module 100 according to an embodiment of the invention is depicted.

The main components of the air delivery module 100 as depicted in Figures 1 and 2 are arranged in a more realistic manner. The battery casing 14 is shown as a box comprising a number of cells 12 arranged side by side.

Thus a fluid path of the cooling air inside of the battery casing 14 may be provided between the cells 12, in particular between the longitudinal sides of the cells 12 for an effective direct cooling of the cells 12.

For improving the acoustic behavior of the air delivery module 100 acoustic material 34, in particular noise absorbent material may be arranged inside or outside of the battery casing 14. In Figure 3 the acoustic material 34 is arranged surrounding the battery casing 14 in a schematic way. In particular acoustic material 34 may also be arranged around the at least one fan 16 in order to decrease noise emissions from blowing air.

Additionally one or more porous patches for reducing noise emissions may be arranged at least in an inlet duct 54 connected to the air intake manifold 22 and/or an outlet duct 60 connected to the exhaust air manifold 26.

Further, one or more turbulence-generating elements, in particular plates may be arranged in the fluid path of the battery casing 14 for increasing air turbulences in order to improve the cooling behavior of the air delivery module 100.

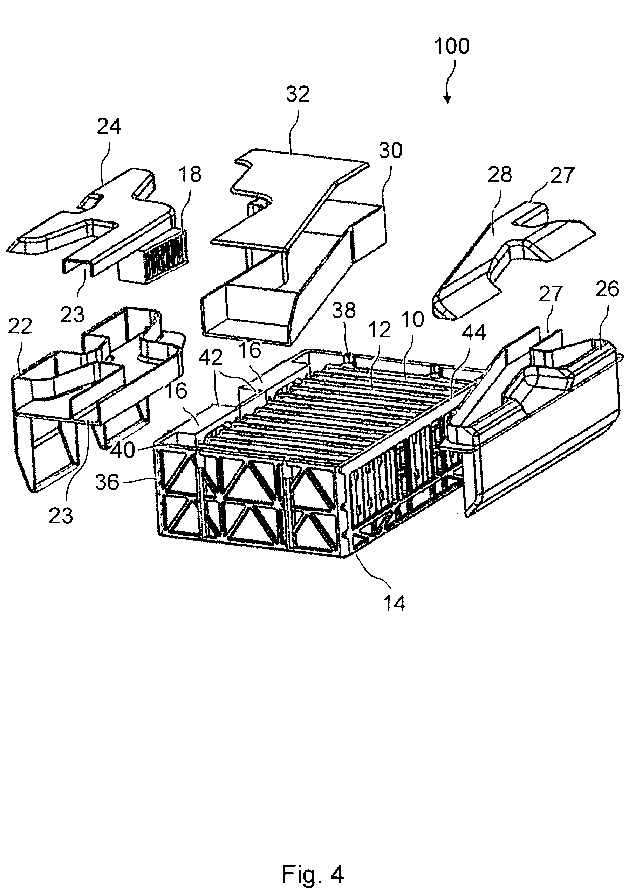

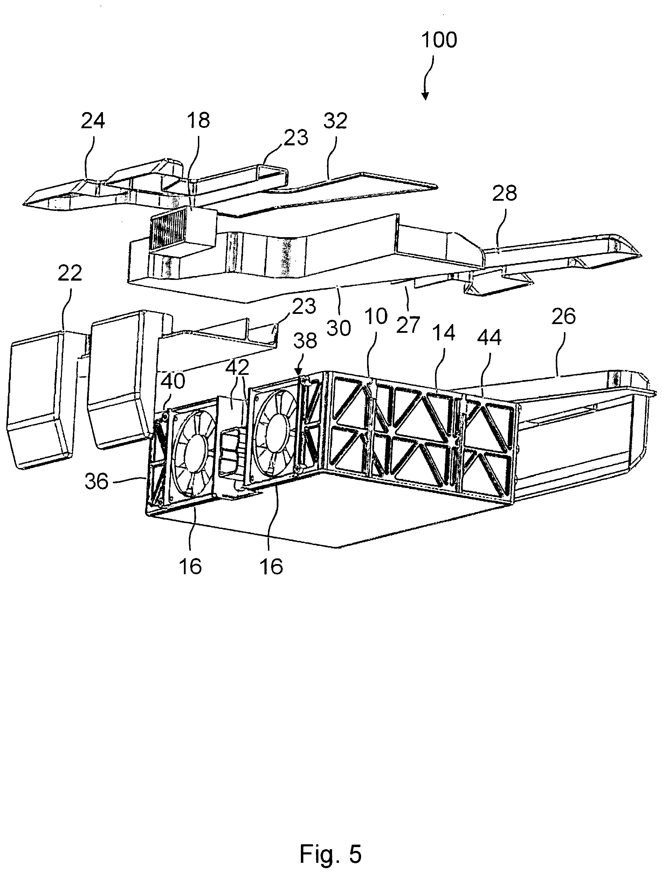

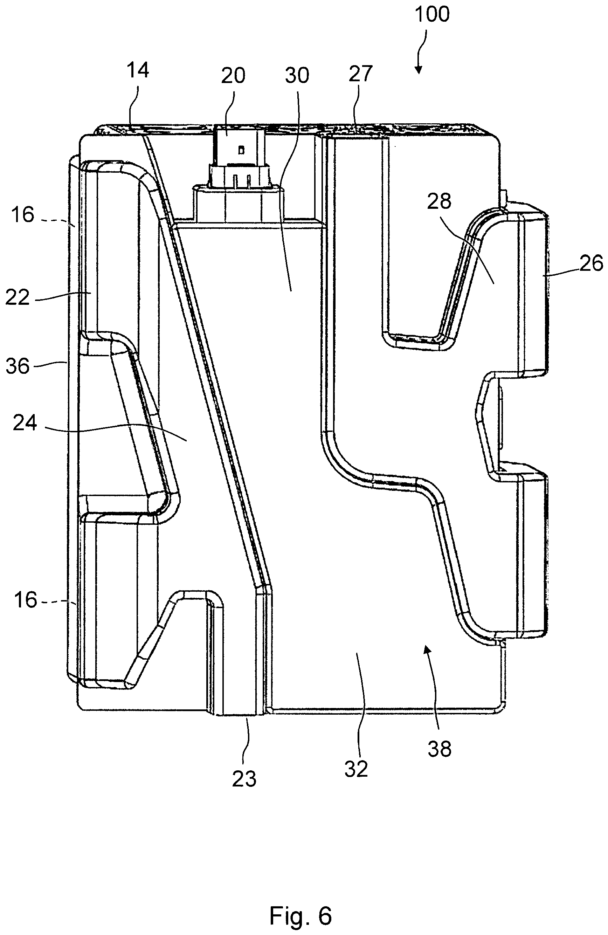

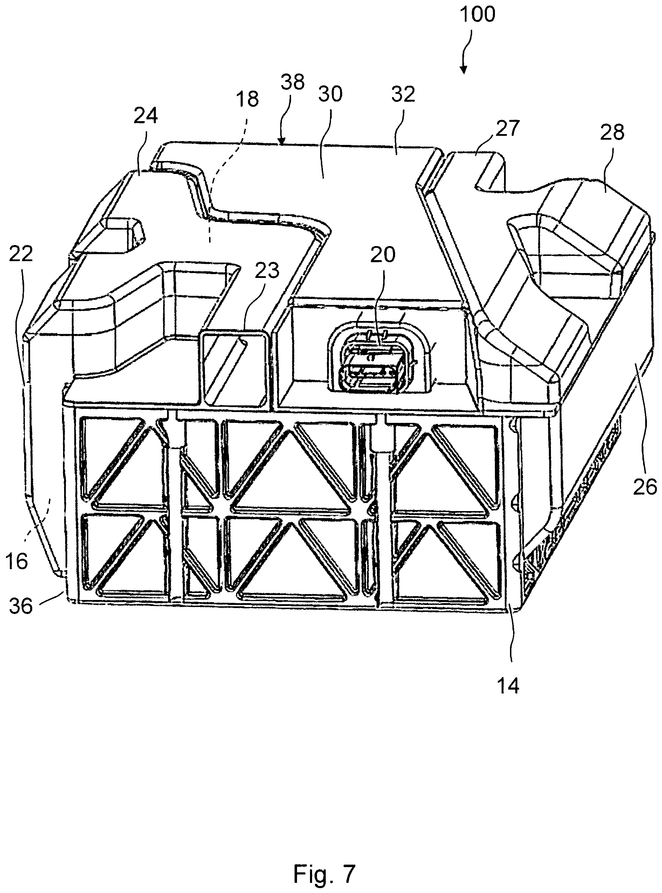

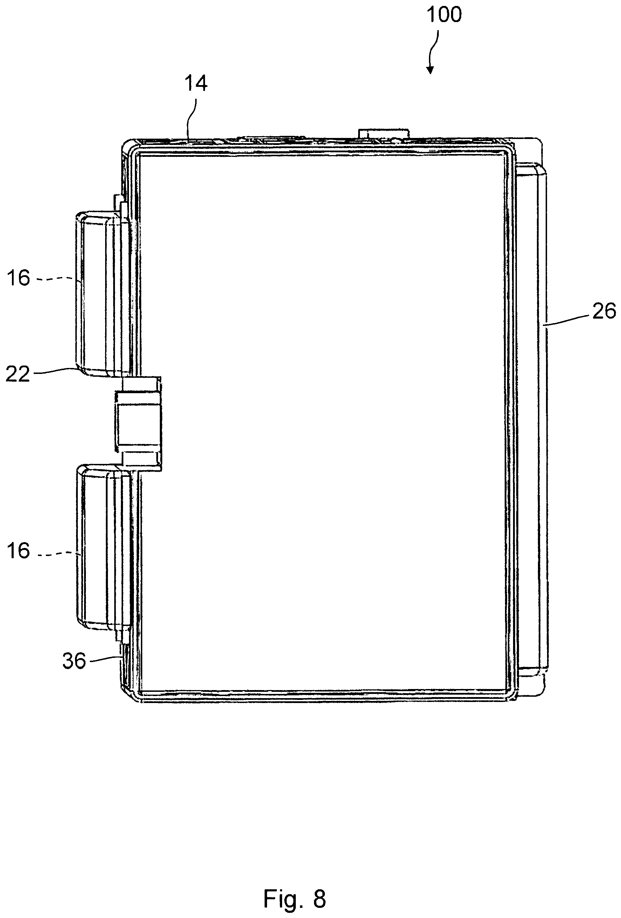

Figure 4 depicts an exploded view of the air delivery module 100 according to an embodiment of the invention from a top side, Figure 5 from a bottom side, whereas in Figure 6 a view of the mounted air delivery module 100 from a top side, in Figure 7 an isometric view and in Figure 8 a view from a bottom side is shown.

The battery casing 14 comprises an air intake manifold 22, two fans 16 and an exhaust air manifold 26. The air intake manifold 22 is configured to be at least in fluid connection with an outside 80 or with an interior 202 of the vehicle 200 or with an air conditioning system 52 supplying air from the outside 80 to the vehicle 200. The exhaust air manifold 26 is configured to be at least in fluid connection with the outside 80 or with the interior 202 of the vehicle 202. The two fans 16 are provided for blowing air from the air intake manifold 22 through the battery casing 14 to the exhaust air manifold 26 for cooling the battery pack 10.

In the embodiment shown two fans 16 are arranged at the battery casing 14 for supplying air to the battery casing 14. The two fans 16 are arranged on a side wall 36 of the battery casing 14.

The battery casing 14 comprises segments 40, 42, 44 for accommodating the air intake manifold 22, the two fans 16 and the exhaust air manifold 26. A segment 40 may be provided for accommodating the air intake manifold 22. A further segment 44 may be provided for accommodating the exhaust air manifold 26. Two segments 42 may be provided for accommodating the two fans 16 at the side wall 36 of the battery casing 14.

The air intake manifold 22 and the exhaust air manifold 26 are arranged on opposite sides of the battery casing 14.

Cells 12 of the battery pack 10 are stacked side by side inside the battery casing 14. A gap may be provided between the cells 12 in order to blow air through between the cells 12.

The air intake manifold 22 as well as the exhaust air manifold 26 comprise a body which may be closed by an appropriate cover 24, 28 for mounting the manifolds 22, 26 to the battery casing 14. The air intake manifold 22 exhibits the inlet port 23 formed by the body of the air intake manifold 22 and the cover 24. The exhaust air manifold 26 exhibits the outlet port 27 formed by the body of the exhaust air manifold 26 and the cover 28.

The filter element 18 is arranged in the air intake manifold 22. In the embodiment shown the filter element 18 therefore is arranged before the fans 16.

The electronic compartment 30 for accommodating electronic components is arranged on a top side 38 of the battery casing 14, between the at least one air intake manifold 22 and the at least one exhaust air manifold 26. The electronic compartment 30 comprises a body which may be closed by an electronic compartment cover 32. A low voltage connector 20 is arranged in the electronic compartment 30 for connecting electronic components inside the electronic compartment 30.

A control unit (not shown) may be provided for controlling the speed of the at least one fan 16 depending at least on heat generation of the battery pack 10. The control unit could be accommodated in the electronic compartment 30, too.

### Reference numbers

- 10: battery pack
- 12: cells
- 14: battery casing
- 16: fan
- 18: filter element
- 20: LV connector
- 22: air intake manifold
- 23: inlet port
- 24: air intake manifold cover
- 26: exhaust air manifold
- 27: outlet port
- 28: exhaust air manifold cover
- 30: electronic compartment
- 32: electronic compartment cover
- 34: acoustic material
- 36: side wall
- 38: top side
- 40: segment
- 50: vehicle
- 52: air conditioning system
- 54: inlet duct
- 56: three-way valve
- 58: three-way valve
- 60: outlet duct
- 70: fresh air inlet
- 72: air inlet
- 74: air outlet
- 76: interior outlet
- 80: outside
- 100: air delivery module
- 200: vehicle
- 202: interior
- 204: front seat

## Claims

1. An air delivery module (100) for a battery pack (10) of an electric driven or hybrid vehicle (200) comprising a battery casing (14) with at least an air intake manifold (22), at least one fan (16) and at least an exhaust air manifold (26),
wherein the air intake manifold (22) is configured to be at least in fluid connection with an outside (80) and/or with an interior (202) of the vehicle (200) and/or with an air conditioning system (52) supplying air from the outside (80) to the vehicle (200),
wherein the exhaust air manifold (26) is configured to be at least in fluid connection with the outside (80) and/or with the interior (202) of the vehicle (202), wherein the at least one fan (16) is provided for blowing air from the air intake manifold (22) through the battery casing (14) to the exhaust air manifold (26) for cooling the battery pack (10).

2. The air delivery module according to claim 1, wherein a three-way valve (56) is arranged at an inlet port (23) of the air intake manifold (22) to selectively switch an air inlet (72) from the outside (80) and an inlet duct (54) from the air conditioning system (52) of the vehicle (200) for supplying air to the battery casing (14), and/or wherein a three-way valve (58) is arranged at an outlet port (27) of the exhaust air manifold (26) to selectively switch an air outlet (74) to the outside (80) and an interior outlet (76) to the interior (202) of the vehicle (200) for purging air from the battery casing (14).

3. The air delivery module according to claim 1 or claim 2, wherein at least one filter element (18) for filtering the air is arranged upstream and/or downstream of the fan (16).

4. The air delivery module according to any one of the preceding claims, wherein a fluid path of the cooling air inside of the battery casing (14) is provided between cells (12), in particular between longitudinal sides of the cells (12) of the battery pack (10) arranged in the battery casing (14).

5. The air delivery module according to any one of the preceding claims, wherein acoustic material (34), in particular noise absorbent material is arranged inside or outside of the battery casing (14), in particular around the at least one fan (16) in order to decrease noise emissions from blowing air.

6. The air delivery module according to any one of the preceding claims, wherein one or more porous patches for reducing noise emissions are arranged at least in an inlet duct (54) connected to the air intake manifold (22) and/or an outlet duct (60) connected to the exhaust air manifold (26).

7. The air delivery module according to any one of the claims 4 to 6, wherein one or more turbulence-generating elements, in particular plates, are arranged in the fluid path of the battery casing (14) for increasing air turbulences.

8. The air delivery module according to any one of the preceding claims, wherein the at least one fan (16) is arranged on a side wall (36) of the battery casing (14).

9. The air delivery module according to any one of the preceding claims, wherein an electronic compartment (30) for accommodating electronic components is arranged at the battery casing (14), in particular on a top side (38) of the battery casing (14)

10. The air delivery module according to any one of the preceding claims, wherein the air intake manifold (22) and the exhaust air manifold (26) are arranged on opposite sides of the battery casing (14).

11. The air delivery module according to any one of the preceding claims, wherein a control unit is provided for controlling the speed of the at least one fan (16) depending at least on heat generation of the battery pack (10).

12. A battery casing (14) for an air delivery module (100) for a battery pack (10) of an electric driven or hybrid vehicle (200), comprising at least an air intake manifold (22), at least one fan (16) and at least an exhaust air manifold (26),
wherein the air intake manifold (22) is configured to be at least in fluid connection with an outside (80) and/or with an interior (202) of the vehicle (200) and/or with an air conditioning system (52) supplying air from the outside (80) to the vehicle (200),
wherein the exhaust air manifold (26) is configured to be at least in fluid connection with the outside (80) and/or with the interior (202) of the vehicle (202), wherein the at least one fan (16) is provided for blowing air from the air intake manifold (22) through the battery casing (14) to the exhaust air manifold (26) for cooling the battery pack (10).

13. The battery casing according to claim 12, comprising segments (40, 42, 44) for accommodating the at least one air intake manifold (22), the at least one fan (16) and the at least an exhaust air manifold (26).

14. The battery casing according to claim 12 or 13, wherein an electronic compartment (30) for accommodating electronic components is arranged on a top side (38) of the battery casing (14), in particular between the at least one air intake manifold (22) and the at least one exhaust air manifold (26).

15. The battery casing according to anyone of the claims 12 to 14, wherein the at least one fan (16) is arranged on a side wall (36) of the battery casing (14).
